# EUROPÄISCHE PATENTANMELDUNG

(11) **EP 2 583 846 A1**
(43) Veröffentlichungstag der Anmeldung: **24.04.2013**
(21) Anmeldenummer: 12188744.2
(22) Anmeldetag: 16.10.2012
(51) Int. Cl.: B60H 3/06, B01D 46/00, A61L 2/00

(54) **Luftreinigungsvorrichtung**

(30) Priorität: 18.10.2011 DE 102011084701
(71) Anmelder: Behr GmbH & Co. KG, 70469 Stuttgart (DE)
(72) Erfinder: Stiehler, Dipl.-Ing. Daniela, 70597 Stuttgart (DE); Gorges, Dr. rer. nat. Roger, 70193 Stuttgart (DE)
(74) Vertreter: Grauel, Andreas

(57) **Zusammenfassung**

Die Erfindung betrifft eine Luftreinigungsvorrichtung (1) zur Reinigung von mit Schadstoffen und/oder Schadgasen belasteter Luft, insbesondere für den Kraftfahrzeuginnenraum, dadurch gekennzeichnet, dass die Vorrichtung aus einer zweistufigen Katalyse, bestehend aus Photokatalyse und Redoxkatalyse besteht, die die hohe Reaktionverweifzeit in einem Reaktionpuffer ausnutzt, um Schadstoffe in Wasser und Kohlendioxid umzuwandeln, Dabei weißt sie Mittel zur Photokatalyse (7) auf zur katatytischen Behandlung der Luftbestandteile und weiterhin mit einem Reaktionspuffer mit Redoxkatalysatoren (9) versehen ist zur Behandlung der Luftbestandteile und/oder der zuvor katalytisch behandelten Luftbestandteile bzw. der Reaktionsprodukte der katalytisch behandelten Luftbestandteile.

## Beschreibung

### Technisches Gebiet

Die Erfindung betrifft eine Luftreinigungsvorrichtung nach dem Oberbegriff von Anspruch 1 und ein Verfahren zur Luftreinigung nach dem Oberbegriff von Anspruch 8.

### Stand der Technik

Luftreinigungsvorrichtungen sind im Stand der Technik für Kraftfahrzeuge beispielsweise durch die Verwendung von Staubfiltern hinlänglich bekannt. Diese Staubfilter filtern aber lediglich die Staub- bzw. Schwebeteilchen in der Luft, was bei heutigen Anforderungen an die Lufiqualität im Fahrzeuginnenraum als alleinige Reinigungsmaßnahme nicht mehr ausreichend ist.

Weiterhin existieren Aktivkohlefilter, die durch Gasadsorption reinigen. Dabei reagiert der Kohlenstoff auch als ein Reduktionsmittel und ist für die Entfernung von Oxidationsmitteln wie Ozon aus der Zuluft geeignet.

Zur Reduzierung von Schad- und Geruchsstoffen sind auch Hybridfilter, ein Kompromiss aus Staub- und Aktivkohlefilter, bekannt geworden.

Die Hybridfilter gemäß dem Stand der Technik, die in Fahrzeugen verbaut sind, sind typischerweise Kompromisslösungen zu den Aktivkohlefiltern. Die früheren Aktivkohlefilter zeigten zwar eine hohe Adsorptionsleitung, waren aber hinsichtlich Druckverlust, Gewicht und Preis eher ungünstig. Die Hybridfilter bestehen dabei aus einem Trägervlies, welches mit Aktivkohle zur Gasadsorption beschichtet ist, auf der ein Partikelvlies als Abdeckvlies zur Staubflitration aufgebracht ist. Solche Filter werden beispielsweise in Klimaanlagen von Kraftfahrzeugen verwendet. Diese lassen hinsichtlich ihrer Fähigkeit zur Gas- und zur Staubreinigung noch Wünsche offen. So sind die Adsorbtionskapazität und die Spontanität bei diesen Filtern eher schlecht ausgeführt, was recht oft zu Sättigung und dem Durchtritt von Gasspitzen führt, so dass der Passagier im Kraftfahrzeuginnenraum zumindest teilweise durch diese durch den Filter tretenden Gasspitzen und der schleichenden Adsorption belästigt wird. Bei einer hohen Staubbeladung der Filter führt dies zu einem steigenden Druckverlust über die Lebensdauer des Filters, was im Innenraum zu einer Luftmengenreduzierung führt.

Darüber hinaus sind die derzeit verwendeten Aktickohlematerialien nicht in der Lage geruchsaktive Substanzen in ausreichender Menge zu adsorbieren. Dies ist auch dadurch verursacht, dass die heutigen Filter aufgrund der vorhandenen Norm DIN 11555 auf eine Adsorption von n-Butan und Toluol ausgelegt ist. Dies ist jedoch für die Abscheidung von Molekülen von Geruchsstoffen und VOCs aus den Innenraummaterialien nicht optimal. Insofern sind die heute verwendeten Filter für die Reinigung von Luft, welche mit flüchtigen organischen Verbindungen oder Geruchsstoffen belastet ist, nicht optimal.

Die Situation verschärft sich in Zukunft noch einmal sehr deutlich, da aufgrund der immer weiter voranschreitenden Bedürfnisse hinsichtlich der Energieerfizienz zukünftiger Kraftfahrzeuge die Klimaanlagen immer häufiger mit hohen Umluftanteilen betrieben werden, so dass beispielsweise bei einem 60%-igen Umluftanteil die Schadgasbelastung im Kraftfahrzeuginnenraum sich deutlich von heutigen Szenarien unterscheidet und die Schadgasbelastung zunehmen wird. Daher ist die Luftreinigung in Bezug auf flüchtige organische Verbindungen (VOCs) des Fahrzeuginnenraumes und in Bezug auf anorganische und organische Moleküle von Geruchsstoffen besonders wesentlich. Dadurch kann ein gesunder und hygienischer Fahrzeug-Innenraum für die Passagiere des Fahrzeuges gewährleistet werden.

### Darstellung der Erfindung, Aufgabe, Lösung, Vorteile

Es ist die Aufgabe der Erfindung, eine Luftreinigungsvorrichtung zu schaffen, die in der Lage ist, die erwartete hohe Luftqualität auch bei einem hohen Umluftanteil zu gewährleisten.

Dies wird mit einer Luftreinigungsvorrichtung mit den Merkmalen von Anspruch 1 erreicht, wonach eine Luftreinigungsvorrichtung zur Reinigung von mit Schadstoffen und/oder Schadgasen belasteter Luft, insbesondere für den Kraftfahrzeuginnenraum, geschaffen wird, wobei die Luftreinigungsvorrichtung Mittel zur Photokatalyse aufweist zur katalytischen Behandlung der Luftbestandteile und weiterhin mit einem Reaktionspuffer versehen, welcher aus einem Adsorbens und Redoxkatalysatoren besteht, ist zur Behandlung der Luftbestandteile und/oder der zuvor katalytisch behandelten Luftbestandteile bzw. der Reaktionsprodukte der katalytisch behandelten Luftbestandteite. Im Reaktionspuffer kann in Dunkelreaktionen die Weiteroxidation der zuvor photokatalytisch behandelten Moleküle stattfinden. Diese Weiteroxidation wird katalytisch durch die Redoxkatalysatoren vorangetrieben. Der Begriff der Luftbestandteile ist hierbei nicht nur auf Luftmoleküle als solche zu beschränken, sondern unter diesen benannten Luftbestandteilen sind auch die Schadstoffe, Schwebstoffe bzw. Schadgase und Verunreinigungen zu subsummieren.

Durch die photokatalytische Behandlung der Luft bzw. der Luftbestandteile werden zumindest Luftmoleküle und gasförmige Wassermoleküle angeregt und es werden dadurch hochreaktive, unselektive Sauerstoffspezien erzeugt. Dabei werden bevorzugt Hydroxylradikale (OH-Radikale) erzeugt. Diese reagieren wiederum unselektiv mit den flüchtigen organischen Verbindungen (VOC) der Fahrzeuginnenraumluft und mit den darin enthaltenen Geruchsstoffen bzw. den Molekülen, welche die Gerüche verursachen. Dabei werden diese Verbindungen bzw. Moleküle entweder direkt in unproblematische Endprodukte umgewandelt, wie beispielsweise in Wasser oder Kohlendioxid oder sie werden in radikalische Zwischenprodukte umgewandelt, die dann im Reaktionspuffer weiter behandelt werden. Dabei werden auch die überschüssigen OH-Radikale oder sonstige entstandenen Radikale in den Reaktionspuffer eingebracht und umgewandelt. Diese Umwandlung findet durch das Verweilen im Reaktionpuffer und der katalytischen Umwandlung durch die darin enthaltenen Redoxkatalysatoren statt. Die Umsetzung von Schadgasen und Geruchstoffen findet somit in mehreren Reaktionsschritten statt. Anoxidation durch photokatalytisch erzeugte Hydroxylradikale und reaktive Sauerstoffspezien und im zweiten Schritt Komplettumsetzung an Readoxkatalysatoren unter Zuhilfenahme der langen Verweilzeit in den Poren der Adsorbens des Reaktionspuffers und der weiterhin gespeicherten überschüssigen Hydroxylradikalen und reaktiven Sauerstoffspezien aus der zuvor stattfinden Photokatatyse.

Dabei ist es vorteilhaft, wenn die Vorrichtung ein Gehäuse umfasst, in welchem die Mittel zur Photokatalyse und der Reaktionspuffer angeordnet sind, wobei das Gehäuse mit einem Lufteintritt und einem Luftaustritt versehen ist zum Einleiten der Luft und zum Ausleiten der gereinigter Luft. Dabei kann das Gehäuse weiterhin noch ein Gebläse und/oder Luftleitelemente und Luftsteuerelemente aufweisen zur Öffnung oder Verschließung des Lufteintritts und/oder des Luftaustritts bzw. der Veränderung des Durchtrittsquerschnitts des Lufteintritts und/oder des Luftaustritts. Erfindungsgemäß ist es vorteilhaft, wenn die Mittel zur Photokatalyse zumindest eine Lichtquelle umfasst oder vorzugsweise auch eine Mehrzahl von Lichtquellen umfassen. Dabei sind die Lichtquellen vorteilhaft als LEDs ausgebildet, die auch als Leuchtdioden bekannt sind. Dabei ist es besonders vorteilhaft, wenn die Lichtquellen Licht im sichtbaren Wellenlängenbereich aussenden. Dabei ist die Wellenlänge des Lichts vorteilhaft größer als 365 nm.

Auch ist es bei einem Ausführungsbeispiel vorteilhaft, wenn die Mittel zur Photokatalyse ein photokatalytisches Material umfassen, wie bevorzugt Titandioxid oder modifiziertes Titandioxid, das für eine Anregung im Wellenlängenbereich des sichtbaren Lichts modifiziert ist.

Für den Reaktionspuffer der Vorrichtung ist es zweckmäßig, wenn dieser aus Materialpartikeln besteht, vorzugsweise aus einer Schüttung von Materialpartikeln besteht. Dabei ist es bevorzugt, wenn der Reaktionspuffer aus Aktivkohlepartikeln besteht oder diese als einen Bestandteil aufweist. Bevorzugt ist der Reaktionspuffer eine Mischung aus Aktivkohle oder einem Gasadsorbens und Redoxkatalysatoren, bevorzug aus der Gruppe der Übergangsmetalle. Bevorzugt stellt der Innenraum des Reaktionspuffers einen Dunkelraurn das, so dass die Reaktion im Reaktionspuffer in Dunkelheit bzw. in annähernder Dunkelheit erfolgen kann.

Weiterhin ist es vorteilhaft, wenn der Reaktionspuffer oder die Partikel des Reaktionspuffers imprägniert sind. Diese Imprägnierung kann bevorzugt mit einem oder mehreren thermischen Katalysatoren (Redoxkatalysatoren aus dem Bereich der Übergangsmetalle) erfolgen. Dabei ist es zweckmäßig, wenn als thermische Katalysatoren Redoxkatalysatoren und/oder Edelmetallverbindungen eingesetzt werden.

Die Aufgabe bezüglich des Verfahrens wird mit den Merkmalen von Anspruch 8 gelöst. Dabei wird erfindungsgemäß die Luft mittels Mitteln zur Photokatalyse behandelt wird um Sauerstoffspezien zu erzeugen, die mit vorhandenen flüchtigen organischen Verbindungen reagieren und entweder radikalische Zwischenprodukte oder Endprodukte erzeugen, wobei die radikalischen Zwischenprodukte wiederum in einem Reaktionspuffer zu Endprodukten reagieren.

Weitere vorteilhafte Ausgestaltungen sind durch die nachfolgende

Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: ein erstes Ausführungsbeispiel einer erfindungsgemäßen Luftreinigungsvorrichtung, und
- Fig. 2: ein Diagramm zur Erläuterung der Wirkungsweise der Luftreinigungsvorrichtung.

### Bevorzugte Ausführung der Erfindung

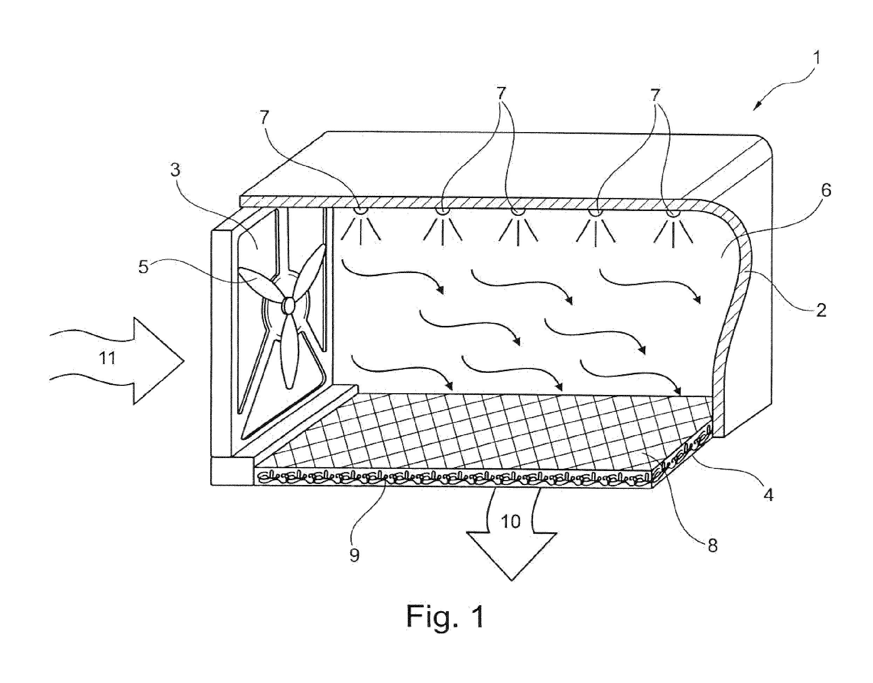

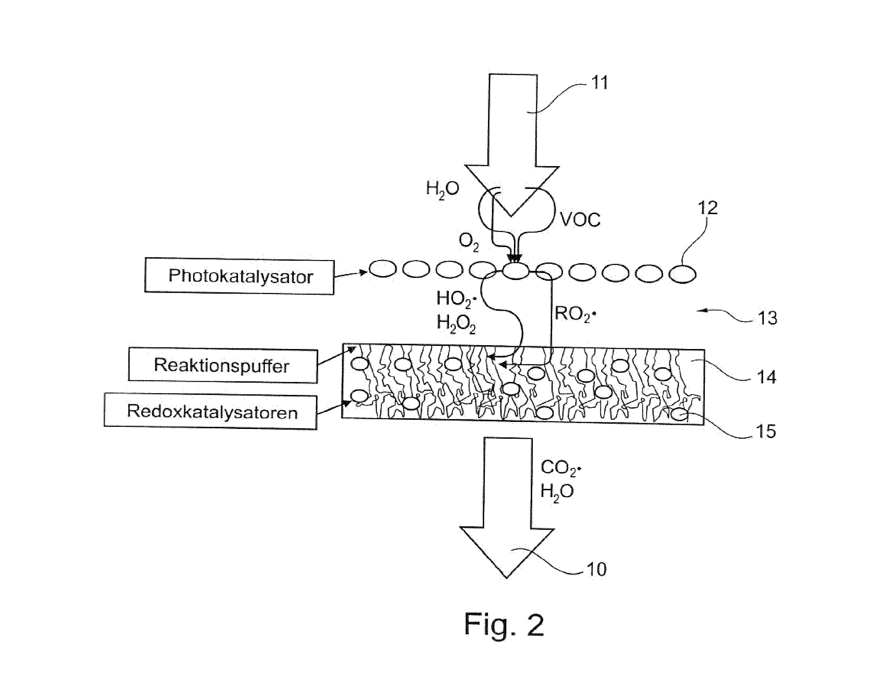

Die Figur 1 zeigt ein erstes Ausführungsbeispiel einer erfindungsgemäßen Luftreinigungsvorrichtung 1. Die Luftreinigungsvorrichtung weist ein Gehäuse 2 auf, das einen Lufteinritt 3 und einen Luftaustritt 4 aufweist. Das Gehäuse ist im Ausführungsbeispiel der Figur 1 quaderförmig ausgebildet wobei der Lufteintritt in einer Ebene angeordnet ist, die senkrecht steht auf der Ebene des Luftaustritts. Bei anderen Ausführungsbeispielen kann der Lufteintritt aber auch in einer Ebene parallel zur Ebene des Luftaustritts angeordnet sein oder die Ebene des Lufteintritts kann in einem beliebigen Winkel zur Ebene des Luftaustritts ausgerichtet sein. Das Gehäuse 2 der Luftreinigungsvorrichtung ist auch nicht auf die quaderförmige Gestalt der Figur 2 beschränkt. Vielmehr kann das Gehäuse auch eine andere Gestalt annehmen, so dass sie bevorzugt an einem beliebigen Ort in der Fahrgastzelle oder an eine Klimatisierungseinrichtung eines Kraftfahrzeuges implementiert oder angebracht werden kann.

Weiterhin ist zu erkennen, dass dem Lufteintritt ein Gebläse 5 zugeordnet ist, um die Luft in die Luftreinigungsvorrichtung leiten zu können. Das Gebläse 5 muss nicht zwingend in der Luftreinigungsvorrichtung angeordnet sein, es kann auch vor oder nach der Luftreinigungsvorrichtung in einen Luftkanal vorgesehen sein, um die Luft in die Luftreinigungsvorrichtung zu drücken oder durch die Luftreinigungsvorrichtung anzusaugen.

Weiterhin sind an dem Lufteintritt und/oder an dem Luftaustritt 3, 4 auch Luftstromsteuerelemente, wie beispielsweise Luftklappen, vorsehbar, um den Lufteintritt und/oder den Luftaustritt zu öffnen oder zu schließen oder den Durchtrittsquerschnitt durch den Lufteintritt und/oder durch den Luftaustritt zu verändern. Diese Luftstromsteuerelemente sind in der Figur 1 nicht dargestellt.

Im Innenraum 6 der Lurtreinigungsvorrichtung sind Mittel zur Photokatalyse 7 vorgesehen, die an der oberen Gehäusewandung angeordnet sind. In einer besonders bevorzugten Ausgestaltung der Erfindung sind diese Mittel zur Photokatalyse Lichtquellen, die beispielsweise als LEDs oder als Leuchtdioden ausgebildet sind. Andere Lichtquellen können jedoch auch verwendet werden. Die Anordnung der Lichtquellen ist bevorzugt gegenüber einem photokatlytischen Material angeordnet, welches ebenso zu den Mitteln zur Photokatalyse zählt. Das photokatalytische Material ist im Ausführungsbeispiel der Figur 1 als mattenförmiges Element ausgebildet, welches sich in der Ebene des Luftaustritts erstreckt. Das photokatalytische Material trägt das Bezugszeichen 8. Direkt unterhalb des photokatalytischen Materials 8 ist der Reaktionspuffer 9 als mattenförmiges Element angeordnet. Dieses mattenförmige Element des Reaktionspuffers 9 liegt in einer Ebene mit dem Element des photokatalytischen Materials 8, wobei diese getrennt voneinander ausgebildet sein können oder auch als Baueinheit miteinander verbunden ausgebildet sein können. Dabei ist es vorteilhaft, wenn das photokatalytische Material als gewebe- oder netzförmiges Element ausgebildet ist und der Reaktionspuffer als Schüttung ausgebildet ist, die in einem Behältnis wie beispielsweise in einem Gitter oder Netz angeordnet ist und das photokatalytische Material und der Reaktionspuffer miteinander verbunden sind. Auch ist es vorstellbar, dass das Behältnis für den Reaktionspuffer mit einem Mittel versehen ist, welches das photokatalytische Material aufweist oder bildet. Dabei ist es besonders zweckmäßig, wenn sowohl das photokatalytische Material bzw. der Träger des photokatalytischen Materials und der Reaktionspuffer luftdurchlässig gestaltet sind, so dass die zu reinigende Luft vom Lufteintritt 3 der Vorrichtung 1 einströmend durch einen Innenraum 6 der Vorrichtung strömt, dort dem Licht des Mittels zur Photokatalyse ausgesetzt ist und an dem photokatalytischen Material behandelt wird bzw. reagiert.

Anschließend tritt die Luft durch das photokatalytische Material hindurch in den Reaktionspuffer, in welchem beispielsweise Redoxkatalysatoren angeordnet sind, um die Reaktions- oder Behandlungsprodukte der behandelten Luft weiter zu behandeln. Dabei werden die Luftbestandteile oder die zuvor katalytisch behandelten Luftbestandteile bzw. die Reaktionsprodukte der katalytisch behandelten Luftbestandteile erneut behandelt. Anschließend tritt die behandelte Luft und die Reaktionsprodukte der behandelten Luft 10 aus dem Austritt 4 der Vorrichtung 1 aus.

Die Figur 2 zeigt schematisch den Ablauf des Verfahrens. Das Rohgas bzw. die eintretende Luft 11 enthält Wassermoleküle, Luftmoleküle, Schwebstoffe, Schmutzpartikel und gegebenenfalls auch sogenannte flüchtige organische Verbindungen, die im Folgenden mit VOC abgekürzt werden. Diese Luft 11 tritt in die Reinigungsvorrichtung ein und wird am Mittel zur Photokatalyse 12 behandelt, wobei mittels Photokatalyse hoch reaktive, unselektive Sauerstoffspezien erzeugt werden. Diese sind bevorzugt Hydroxylradikale (OH-Radikale). Diese Radikale reagieren unselektiv mit den vorhandenen flüchtigen organischen Verbindungen (VOC), die im Fahrzeuginnenraum vorhanden sind bzw. mit Molekülen, welche Gerüche verursachen. Diese Reaktion erzeugt entweder radikalische Zwischenprodukte oder gleich unproblematische Endprodukte wie beispielsweise Wassermoleküle, Kohlendioxid oder andere Verbindungen. Diese sind in Figur 2 mit 13 gekennzeichnet.

Anschließend treten die radikalischen Zwischenprodukte oder auch Endprodukte der Reaktion oder auch unreagierte Moleküle in den Reaktionspuffer ein und werden dort weiterbehandelt. Der Reaktionspuffer besteht dabei bevorzugt aus Aktivkohle, welche mit Redoxkatalysatoren versetzt sein kann. In einem einfachen Ausführungsbeispiel wäre die Aktivkohle ohne Redoxkatalysatoren verwendbar, in einem bevorzugten Ausführungsbeispiel wäre die Aktivkohle mit Redoxkatalysatoren versetzt. Anstatt Aktivkohle kann aber auch ein anderes Adsorbens verwendet werden, welches adsorbierende Eigenschaften aufweist.

In dem Reaktionspuffer erfolgt die Endreaktion bevorzugt im Dunkeln, wobei die radikalischen Zwischenprodukte weiterreagieren und zu eher unproblematischen Endprodukten wie Wasser oder Kohlendioxid reagieren. Dabei unterstützt der Redoxkatalysator diese Reaktion der Zwischenprodukte zu den Endprodukten. Die Anordnung der Redoxkatalysatoren 15 in dem Reaktionspuffer 14 kann systematisch durch Anordnung auf einem Träger erfolgen oder zufällig durch Verteilung von Materialien auf beispielsweise Körnern innerhalb der Schüttung eines Adsorbens des Reaktionspuffers. Statt der Redoxkatalysatoren können auch Edelmetallverbindungen verwendet werden, mittels welchen der Reaktionspuffer beispielsweise auch imprägniert, wie beschichtet sein kann. Dazu können einzelne Mengen von Körnern des Reaktionspuffers mit dem Redoxkatalysator beziehungsweise den Edelmetallverbindungen besprüht oder beschichtet sein und diese können dann unter die gesamte verbleibende Menge des Reaktionspuffers gemischt werden, so dass eine statistische Verteilung dieser imprägnierten Elemente des Reaktionspuffers innerhalb des gesamten Reaktionspuffers vorliegt. Hinsichtlich der Edelmetallverbindungen sind Verbindungen insbesondere aus Mangan, Zink, Zinn, Eisen, Platin, Rubidium, Rhodium, Palladium, Silber, Osmium, Iridium, Gold oder Quecksilber verwendbar, wobei auch Kupfer, Antimon oder Wismut als sogenannte Halbedelmetalle verwendbar sind.

Die vorliegende Erfindung kombiniert vorteilhaft eine Katalyse aus der Photokatalyse und der Redoxkatalyse unter Ausnutzung einer hohen Spontanität des Reaktionspuffers, um Schadstoffe und Gerüche bevorzugt zumindest im Wesentlichen vollständig aus der Fahrzeug-Innenraumlauft zu entfernen, um eine gesundheitlich und hygienisch angenehme Luft für die Insassen des Fahrzeuges zu gewährleisten. Dabei ist es vorteilhaft, dass durch die zweifache Katalyse die organischen Verbindungen beschleunigt abgebaut werden können, was sich besonders auf die Geruchsstoffe positiv auswirkt. Auch erfolgt eine Zersetzung dieser Moleküle, so dass diese abtransportiert werden können und nicht durch Adsorption an das Adsorbens gebunden werden, so dass die Gefahr der schleichenden Desorption im Wesentlichen eliminiert wird. Auch vorteilhaft ist, dass die metallischen Oberflächen der Vorrichtung nach der Reaktion unverändert zur Verfügung stehen.

### Bezugszeichenliste

- 1: Luftreinigungsvorrichtung
- 2: Gehäuse
- 3: Lufteintritt
- 4: Luftaustritt
- 5: Gebläse
- 6: Innenraum
- 7: Mittel zur Photokatalyse
- 8: Photokatalytisches Material
- 9: Reaktionspuffer
- 10: Luft, Reaktionsprodukte
- 11: Rohgas, eintretende Luft
- 12: Mittel zur Photokatalyse
- 13: Zwischenprodukte, Endprodukte
- 14: Reaktionspuffer
- 15: Redoxkatalysator

## Patentansprüche

1. Luftreinigungsvorrichtung (1) zur Reinigung von mit Schadstoffen und/oder Schadgasen belasteter Luft, insbesondere für den Kraftfahrzeuginnenraum, **dadurch gekennzeichnet, dass** die Vorrichtung Mittel zur Photokatalyse (7) aufweist zur katalytischen Behandlung der Luftbestandteile und weiterhin mit einem Reaktionspuffer mit Redoxkatalysatoren (9) versehen ist zur Behandlung der Luftbestandteile und/oder der zuvor katalytisch behandelten Luftbestandteile bzw. der Reaktionsprodukte der katalytisch behandelten Luftbestandteile.

2. Luftreinigungsvorrichtung nach Anspruch 1, dass die Vorrichtung ein Gehäuse umfasst, in welchem die Mittel zur Photokatalyse (7) und der Reaktionspuffer (9) angeordnet sind, wobei das Gehäuse (2) mit einem Lufteintritt (3) und einem Luftaustritt (4) versehen ist zum Einleiten von Luft und zum Ausleiten von gereinigter Luft.

3. Luftreinigungsvorrichtung nach Anspruch 1 oder 2, **dadurch gekennzeichnet, dass** die Mittel zur Photokatalyse (7) zumindest eine Lichtquelle, vorzugsweise eine Mehrzahl von Lichtquellen, umfassen, die bevorzugt als LEDs ausgebildet sind.

4. Luftreinigungsvorrichtung nach Anspruch 1, 2 oder 3, **dadurch gekennzeichnet, dass** die Mittel zur Photokatalyse (7) ein photokatalytisches Material, bevorzugt Titandioxid oder modifiziertes Titandioxid für eine Anregung im Wellenlängenbereich des sichtbaren Lichts, umfassen.

5. Luftreinigungsvorrichtung nach einem der vorhergehenden Ansprüche,
**dadurch gekennzeichnet, dass** der Reaktionspuffer (9) aus einer Schüttung von Materialpartikeln besteht, bevorzugt aus Aktivkohlepartikeln.

6. Luftreinigungsvorrichtung nach einem der vorhergehenden Ansprüche,
**dadurch gekennzeichnet, dass** der Reaktionspuffer (9) oder die Partikel des Reaktionspuffers imprägniert sind, bevorzugt mit einem oder mehreren Redoxkatalysatoren.

7. Luftreinigungsvorrichtung nach Anspruch 6, **dadurch gekennzeichnet, dass** als thermische Katalysatoren Redoxkatalysatoren und/oder Edelmetallverbindungen eingesetzt werden.

8. Verfahren zur Luftreinigung von mit Schadstoffen und/oder Schadgasen versehener Luft mit einer Luftreinigungsvorrichtung (1), insbesondere für den Kraftfahrzeuginnenraum, **dadurch gekennzeichnet, dass** die Luft mittels Mitteln zur Photokatalyse (7) behandelt wird um Sauerstoffspezien zu erzeugen, die mit vorhandenen flüchtigen organischen Verbindungen reagieren und entweder radikalische Zwischenprodukte oder Endprodukte erzeugen, wobei die radikalischen Zwischenprodukte wiederum in einem Reaktionspuffer (9) zu Endprodukten reagieren.
